# EUROPEAN PATENT SPECIFICATION

(11) **EP 2 318 759 B1**
(45) Date of publication and mention of the grant of the patent: **31.10.2018**
(21) Application number: 08789982.9
(22) Date of filing: 12.06.2008
(51) Int. Cl.: F23C 6/04, F23C 5/28

(54) **COMBUSTION SYSTEM TO TRANSFER HEAT AT HIGH TEMPERATURE**
VERBRENNUNGSSYSTEM ZUR HOCHTEMPERATUR-WÄRMEÜBERTRAGUNG
SYSTÈME DE COMBUSTION POUR TRANSFÉRER DE LA CHALEUR À HAUTE TEMPÉRATURE

(43) Date of publication of application: 11.05.2011
(73) Proprietor: Processi Innovativi Srl, 67100 L'Aquila (AQ) (IT)
(72) Inventor: GIACOBBE, Francesco, I-00147 Roma (IT)
(74) Representative: Sarpi, Maurizio
(86) International application number: PCT/IT2008/000392
(87) International publication number: WO 2009/150676

(56) References cited:
- EP-A- 0 369 556
- EP-A- 1 186 570
- EP-A- 1 555 481
- WO-A-97/26985
- FR-A- 2 899 022
- GB-A- 1 533 163
- IT-B- 1 242 150
- US-A- 3 582 296
- US-A- 4 838 897
- US-A- 5 201 650
- US-A- 5 320 071
- US-A- 5 501 162

## Description

The invention relates to a process and apparatus suitable for the transfer of heat at high temperature in heaters for performing catalytic and non catalytic reaction and for preheating and vaporization of fluids.

It is well known that is possible to obtain the combustion of fuels by direct contact of the fuel with the combustion air preheated above the auto ignition temperature. The fuel burns when the heat developed by the exothermic oxidation reactions is developed at a speed higher than the speed of dissipation of the heat. The term auto ignition temperature is used to indicate a temperature at which a rapid combustion is developed in the air.

The auto ignition temperature of some fuels of interest are:

| | |
|---|---|
| - Hydrogen | 574°C |
| - Methane | 634°C |
| - Ethane | 472°C |
| - Propane | 481°C |
| - Butane | 441°C |
| - Pentane | 277°C |
| - Carbon monoxide | 609°C |

### PRIOR ART

After the advent of fuel cells a big effort has been made to develop a fuel processor to produce hydrogen by steam reforming of hydrocarbons. These fuel processors have a very small capacity and are designed also to be installed on mobile equipment as cars.

One solution proposed to supply the heat required by the reaction was to inject the fuel in the combustion air and to install a monolithic oxidation catalyst on the external surface of the catalyst tubes to obtain the combustion of the fuel without installing any burner. However this solution is not suitable for industrial plants because of the higher reforming temperatures and also presents some concerns for safety aspects because of the presence of fuel mixed with combustion air before the oxidation starts on the catalyst surface.

An industrial reformer for the production of hydrogen-rich-containing-gas using the auto ignition concept has been also proposed by replacing the reformer furnace with a tubes-and -shell heat exchanger reactor. The catalyst was installed inside the tubes and the combustion of the fuel was performed in the shell. The reactor in this case is an embodiment where the endothermic reaction occurs inside one or more metallic reactions tubes while the heat generating reactions occur in the shell outside the reaction tubes. As is preferred, the flow path of the reaction components, on the one end, and the combustion components, on the other end, are arranged so that separately fed air and combustion fuel are heated above the auto ignition point before been mixed in the shell where the combustion start by auto-ignition and supplies the heat required to produce the endothermic product, which thereby is correspondingly cooled before exiting the reaction vessel. The inside and outside wall temperatures of the reaction tubes are maintained at acceptably level even though the flame temperature of the combustion gases reaches a very high level. This enables use of metallic rather than ceramic tubes while still obtaining high reaction and thermal efficiency. Also, auto ignition of the combustion gases eliminates the need for separate ignition devices and/or burner structures to initiate and/or stabilizes combustion. By eliminating the need for these devices and allowing direct flame impingement on the reaction tubes, close packing of the reaction tubes in a multi-tube reforming apparatus may be achieved. However, this industrial reformer presents serious mechanical problems because of the high flame temperature and different thermal expansion of the shell and the tubes. Reactors with external adiabatic burners are described by the documents US5201650, FR2899022, EP1186570 and GB1533163.

In order to overcome the drawbacks of the prior art, it is thus a first object of the invention to provide a combustion apparatus for the transfer of heat at high temperature in heaters, wherein only combustion air is preheated at a temperature consistent with the thermal rating of the fired heater and without being necessary to reach the auto ignition temperature. Since in the fired heater the flue gas transfers heat at a temperature much higher than the auto ignition temperature, the invention provides to carry out a partial combustion in an external adiabatic burner to increase the temperature of the combustion air to a higher temperature close to that of the flue gas inside the fired heater itself.

The flue gas from the adiabatic burner contains still all the oxygen required to complete the total combustion of the fuel required to supply the heat of reaction. The mixture of flue gas and pre-combusted air, with all the oxygen required to complete the combustion, is cooled in the heater because of the heat transfer to the process fluid in the coils or in the catalyst tubes. To maintain the temperature at the level required to perform the endothermic reaction additional fuel is injected with spray nozzles and burned.

This combustion system is particularly suitable to perform endothermic reaction like the production of hydrogen by steam reforming or the production of vinyl chloride or ketene and for preheating and vaporization of fluids.

The start up of the heater with the innovative combustion system according to the present invention, is performed by starting the combustion only in the external adiabatic burner. When the temperature of the flue gas leaving the radiant section reaches the desired value, well above the auto ignition point, the fuel fired in the adiabatic burner is controlled to keep the temperature of the residual combustion air, mixed with the flue gas, constant at the desired value and the fired heater is ready to handle the feedstock.

The combustion system of the present invention differs from the actual state of the art where the fuel is fired in all the burners with the same design excess of combustion air with very high flame temperature and consequent high production of NOx.

According to the state of the art, in fact, the transfer of the heat is performed by a limited number of burners where consistent amounts of fuel are fired.

The burners flames are large and can not impinge the coils or the catalyst tubes and this results in a large radiant box and high heat leaks. The cost of the radiant box and of burners is high as it is high also the installation cost since the preheated combustion air must be supplied to each burner. As consequence, the number of burner is limited and it is possible to optimize to a limited extent the transfer of heat from a limited sources of heat to the extended surface of the coils or of the catalyst tubes. To solve these problems cabin type fired heaters with many low capacity all radiant burners installed in the radiant box walls are preferred as fired heater reactors, but the supply of the preheated combustion air to all the burners results in high capital cost and high heat loss in the preheated combustion air channels.

In the present invention these problems are overcame because the burners installed in the radiant box are replaced by many very low cost sources of heat with very small flames. It is possible to optimize the transfer of the heat and to decrease the size of the radiant box to the minimum required for maintenance.

These and other features, objects and advantages of the combustion system according to the present invention will become apparent from the accompanying drawings, in which :
FIG.1 and FIG.2 show respectively the vertical and the horizontal section of a simplified schematic representing the combustion system according to the invention in a reaction heater for the production of ketene or vinyl chloride;
FIG.3 and FIG:4 show respectively the vertical and the horizontal section of the combustion system according to the invention applied to a reaction heater for the production of hydrogen-containing-gas;
FIG. 5 shows a regenerative catalyst tube whic can replace the standard catalyst tubes.

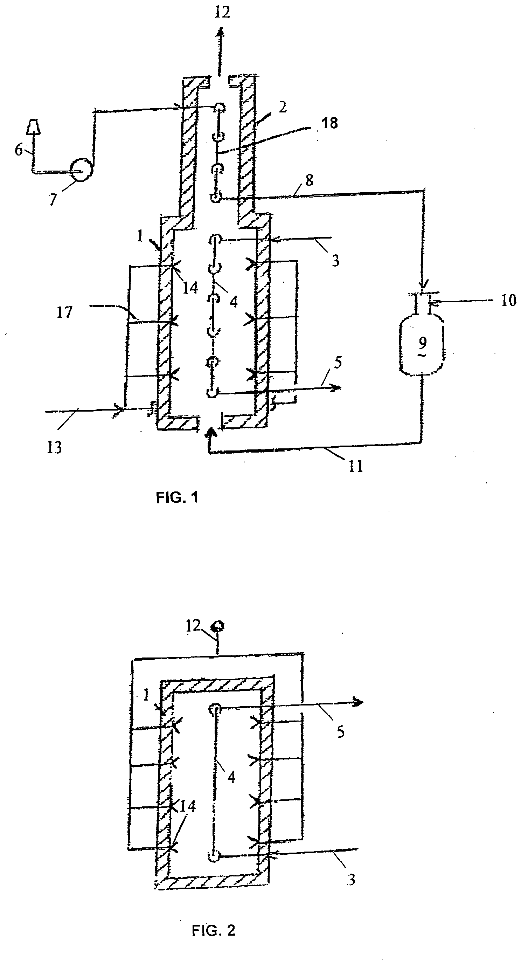

With reference to the drawings, the figures 1 and 2 represent a first embodiment of the invention to transfer heat at high temperature in a reaction heater for the production of ketene or vinyl chloride.

The heater is made of a radiant box 1 and of a convection section 2. The process fluid 3 enters the reaction coil 4 in the radial section 1 and the reaction product 5 leaves the radial section 1 at the bottom. The combustion air 6 coming from the FD Fan 7, is preheated in the coil 18 in the convection section 2. The preheated combustion air 8 is fed to the adiabatic burner 9 where a partial combustion is made with the fuel 10 to reach the desired temperature. The pre-combusted air 11 enters the radiant box 1 at the bottom and the exhaust flue gas 12 leaves the fired heater and it is discharged to the atmosphere by a stack not shown in the figure 1.

On the radiant box walls the spray nozzles 14 are disposed on horizontal rows 17 and inject the desired amounts of the fuel 13. The spray nozzles perform as very small inexpensive burners. The fuel is injected at high velocity to promote turbulence and mixing with the combustion air. The required pressure upstream the spry nozzles is small because the pressure in the radiant box is practically atmospheric. The fuel pressure required to reach the sound velocity, which obviously must be avoided, is about the double of the downstream pressure. The flame of each spray nozzle will be small and this will permit to decrease considerably the area of the horizontal section of the radiant box to the minimum required for maintenance. The decreased area of the cross section of the radiant box will increase the combustion air-flue gas mixture velocity with consequent improvement of the mixing of the combustion air with the injected fuel. Also in the case that the combustion of the fuel would not be fully complete, the residual fuel will burn in the convection section where there is a higher flue gas velocity and more turbulence than in the radiant box.

To control the supply of the heat to reaction coils or to the catalyst tubes, the fuel spray nozzles are arranged in horizontal rows and the fuel fired in each row will make possible to control the temperature profile of the process gas in the coils or in the catalyst tubes. The fuel fired in the first row from the bottom will be fired with a large excess air and this will avoid high flame temperature with consequent decrease of the production of NOx. The excess air will increase by moving versus the top of the radiant box and it will reach the design value in the top row of the spray nozzles.

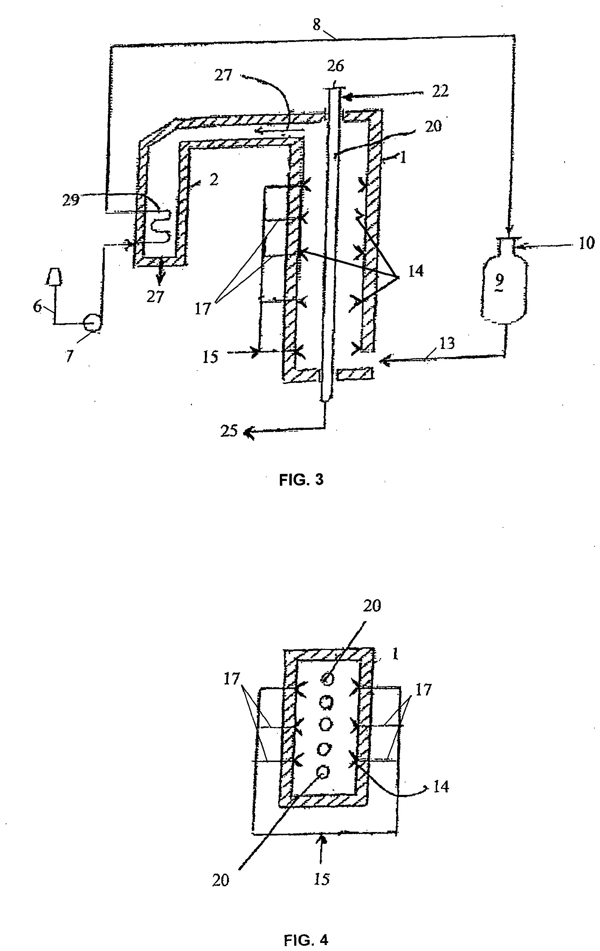

As an additional example the figures 3 and 4 represent the innovative combustion system, according to the invention, to transfer heat at very high temperature in a reaction heater for the production of hydrogen-containing-gas. The chemical reaction is performed in presence of catalyst. The heater is made of a radiant box 1 and of a convection section 2. The catalyst tubes 20 are immersed in the radiant box. The process fluid 22 enters the catalyst tubes 20 at the top and the reaction product 25 leaves the catalyst tubes at the bottom. The catalyst tubes are closed at the top with a flange 26, to load the fresh catalyst and unload the spent catalyst. The combustion air 6 is sent to the convection section 2 by the forced draft fan 7. The preheated combustion air 8, is sent to the adiabatic burner 9 where is fired the fuel 10, after having been preheated in the coil 29 in the convection section 2. The combustion air 13 from the adiabatic burner, preheated to the desired temperature, enters the radiant box 1 at the bottom. The fuel 15 is injected with the spray nozzles 14 installed in horizontal rows 17 to realize a heat transfer in counter current with the process fluid in the catalyst tubes. The flue gas 27 leaves the radiant box at the top and after passing through the convection section 2 is discharged to the atmosphere by a stack nto shown.

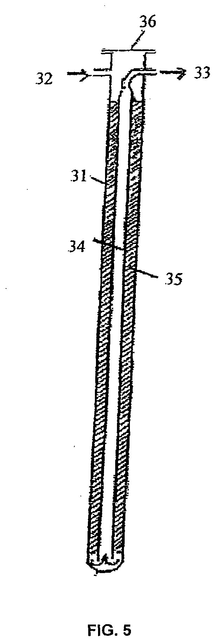

As an additional example, the figure 5 shows a regenerative catalyst tube 31 which can replace the standard catalyst tubes. In the regenerative catalyst tube the feedstock 32 enters the catalyst tube at the top and the product 33 leaves the catalyst tube from the bottom through a riser 34. The catalyst is installed in the annulus 35 formed by the catalyst tubes 31 and the riser 34. The regenerative catalyst tube is closed with the flange 36 to unload the spent catalyst and to load the fresh catalyst. There is a heat transfer from the product 33 and the feedstock 32 through the riser wall. In this way the heat which must be supplied by the flue gas is decreased by the amount of heat exchanged through riser wall.

From the above examples, the following advantages are evident:
- the flue gas temperature can be controlled to optimize the temperature profile of the process fluid in the catalyst tubes or in the reaction coils
- because of the very low cost of the spray nozzles it is possible to install a sufficient number of spray nozzles to supply the heat in a uniform way, and in the required amounts, to the coils or to the catalyst tubes along the catalyst tube exposed length
- because of the very small flames it is possible to decrease the size of the radiant box to the minimum requirement for maintenance
- the heat flux is uniform and local superheating of the coils or of catalyst tubes walls is avoided and there is no risk of coke formation on the process gas side
- the preheated combustion air must be supplied only to the adiabatic burner.
- for large capacity heaters a limited additional number of adiabatic burners could be installed if convenient
- the radiant box, which for safety reasons operates at pressure a little below atmospheric, is sealed and there is no air leakage of the ambient air to the radiant box with consequent reduction of the thermal efficiency
- the heat loss of the radiant box are small because of the decreased size
- the capital cost is low because of the decreased size of the radiant box and because of the use of the spray nozzles in place of the standard burners

## Claims

1. A combustion system to transfer heat at high temperature in a reaction heater comprising a radiant box (1) where the fuel is fired and wherein reaction coils or catalyst tubes are immersed, wherein the system comprises :
one or more external adiabatic burners (9) which are configured so that combustion air is pre-combusted before it is introduced into the radiant box (1) in order to obtain a gaseous mixture of flue gas and pre-combusted air (11,13) with all the oxygen to complete the combustion within the radiant box, at a temperature equal or higher than the auto ignition temperature of the fuel; and
a plurality of fuel spray nozzles (14) arranged on horizontal rows on the radiant box (1) walls, apt to inject a desired amounts of the fuel (15) to control the temperature profile of the process gas in the reaction coils (4) or in the catalyst tubes (20) which are immersed in said radial box (1).

2. A combustion system according to claim 1 **characterized in that** :
the radiant box (1) is attached to a convection section (2) of decreased size, where combustion air is preheated in coil (18) before it is fed to the adiabatic burner (9).

3. A combustion system according to claim 1 according wherein to control the supply of the heat to reaction coils or to catalyst tubes, the fuel (15) injected by every row of spray nozzles (14) may be regulated independently each other.

4. A combustion process to transfer heat at high temperature in a reaction heater comprising a radiant box (1) where the fuel is fired and wherein reaction coils or catalyst tubes are immersed, which provides:
carrying out a partial combustion of the combustion air (8), before it is introduced into the radiant box (1) to be mixed with the fuel (15), in an external adiabatic burner (9), in order to obtain a gaseous mixture of flue gas and pre-combusted air (11,13) with all the oxygen to complete the combustion within the radiant box, at a temperature equal or higher than the auto ignition temperature of the fuel;
feeding to the radial box (1) said heated gaseous mixture coming from said adiabatic burner (9), and
mixing the fuel with said heated gaseous mixture into the radiant box (1) to maintain the temperature at the level required to perform the endothermic reaction, the mixing of the fuel with said gaseous mixture being improved by employing fuel spray nozzles (14) arranged in horizontal rows on the radiant box (1) that inject the requested amount of fuel (15) in different directions and or in different shapes to disperse the fuel in the radiant box (1) and to optimize the temperature profile of the process fluid in the catalyst tubes (20) or in the reaction coils (4) which are immersed in said radial box (1).

5. A combustion process according to the claim 4 where the combustion air from the external adiabatic burner or burners is replaced totally or in part by the exhaust of one or more gas turbines.

6. A combustion process according to the claims 4 and 5 where a fuel preheating is not necessary required.

7. A combustion process according to the claims 4,5 and 6 where the flue gas (11,13) from one or more external adiabatic burners (9) enters the radiant box (1) in a way that it is possible realize a co-current or counter-current flow with the process gas in the coils or in the catalyst tubes as desired.

8. A combustion process according to the claims 4,5 and 6 where the combustion air flow in the radiant box can be realized in one or more parts in co-current or in counter-current flow.

9. A combustion process according to claims 7 and 8 wherein the fuel (15) is injected at high velocity to promote turbulence and mixing with the combustion air.

10. A combustion process according to claims 7-9 wherein the dispersion of the fuel in the combustion air is improved by devices, as metallic or ceramic foams or similar, which improve the mixing.

11. A combustion process according to claims 7-10 wherein the start up of the heater is performed by starting the combustion only in the adiabatic burner (9) .

12. A combustion process according to claim 11, wherein, when the temperature of the flue gas leaving the radiant section reaches the desired value, above the auto ignition point, fuel (10) fired in the adiabatic burner (9) is controlled to keep the temperature of the combustion air constant at the desired value and the fired heater is ready to handle the feedstock.

13. A combustion process according to claim 12 wherein the fuel fired in the first row from the bottom is fired with a large excess air in order to avoid high flame temperature and to decrease the production of Nox.

14. A combustion process according to claim 4 wherein the radiant box (1) operates at pressure lower then atmospheric and is sealed.

## Patentansprüche

1. Verbrennungssystem zum Übertragen von Wärme bei hoher Temperatur in einem Reaktionsheizgerät, umfassend einen Strahlungskasten (1), in dem der Brennstoff entzündet wird und in den Reaktionsspulen oder Katalysatorrohre eingetaucht sind, wobei das System umfasst:
einen oder mehrere externe adiabatische Brenner (9), die so konfiguriert sind, dass Verbrennungsluft vor dem Einleiten in den Strahlungskasten (1) vorverbrannt wird, um ein Gasgemisch aus Rauchgas und vorverbrannter Luft (11, 13) mit dem gesamten Sauerstoff zu erhalten, um die Verbrennung innerhalb des Strahlungskastens abzuschließen, bei einer Temperatur gleich oder höher als die Selbstzündtemperatur des Brennstoffs; und
eine Mehrzahl von Brennstoffsprühdüsen (14), die auf horizontalen Reihen an den Wänden des Strahlungskastens (1) angeordnet sind, und dazu geeignet sind, eine gewünschte Menge des Brennstoffs (15) einzuspritzen, um das Temperaturprofil des Prozessgases in den Reaktionsspulen (4) oder in den Katalysatorrohren (20), die in den Strahlungskasten (1) eingetaucht sind, zu steuern.

2. Verbrennungssystem nach Anspruch 1, **dadurch gekennzeichnet, dass**:
der Strahlungskasten (1) an einem Konvektionsabschnitt (2) mit verminderter Größe angebracht ist, wo die Verbrennungsluft in einer Spule (18) vorgewärmt wird, bevor sie dem adiabatischen Brenner (9) zugeführt wird.

3. Verbrennungssystem nach Anspruch 1, wobei zur Steuerung der Wärmezufuhr zu Reaktionsspulen oder zu Katalysatorrohren der von jeder Reihe von Sprühdüsen (14) eingespritzte Brennstoff (15) unabhängig voneinander regelbar ist.

4. Verbrennungsprozess zum Übertragen von Wärme bei hoher Temperatur in einem Reaktionsheizgerät, umfassend einen Strahlungskasten (1), in dem der Brennstoff entzündet wird und in den Reaktionsspulen oder Katalysatorrohre eingetaucht sind, wobei der Prozess bereitstellt:
Durchführen einer teilweisen Verbrennung der Verbrennungsluft (8), bevor sie zum Mischen mit dem Brennstoff (15) in den Strahlungskasten (1) eingeführt wird, in einem externen adiabatischen Brenner (9), um ein Gasgemisch aus Rauchgas und vorverbrannter Luft (11, 13) mit dem gesamten Sauerstoff zu erhalten, um die Verbrennung innerhalb des Strahlungskastens abzuschließen, bei einer Temperatur gleich oder höher als die Selbstzündungstemperatur des Brennstoffs;
Zuführen des von dem adiabatischen Brenner (9) kommenden erhitzten Gasgemisches zu dem Strahlungskasten (1), und
Mischen des Brennstoffs mit dem erhitzten Gasgemisch in den Strahlungskasten (1), um die Temperatur auf dem für die Durchführung der endothermen Reaktion erforderlichen Niveau zu halten, wobei das Mischen des Brennstoffs mit dem Gasgemisch verbessert wird, indem Brennstoffsprühdüsen (14) verwendet werden, die in horizontalen Reihen auf dem Strahlungskasten (1) angeordnet sind, die die gewünschte Brennstoffmenge (15) in unterschiedliche Richtungen und/oder in unterschiedlichen Formen einspritzen, um den Brennstoff in dem Strahlungskasten (1) zu verteilen und das Temperaturprofil des Prozessfluides in den Katalysatorrohren (20) oder in den Reaktionsspulen (4), die in den Strahlungskasten (1) eingetaucht sind, zu optimieren.

5. Verbrennungsprozess nach Anspruch 4, wobei die Verbrennungsluft von dem externen adiabatischen Brenner oder Brennern ganz oder teilweise durch die Abgase einer oder mehrerer Gasturbinen ersetzt wird.

6. Verbrennungsprozess nach den Ansprüchen 4 und 5, wobei eine Brennstoffvorwärmung nicht notwendigerweise erforderlich ist.

7. Verbrennungsprozess nach den Ansprüchen 4, 5 und 6, wobei das Rauchgas (11, 13) von einem oder mehreren externen adiabatischen Brennern (9) so in den Strahlungskasten (1) eintritt, dass es möglich ist, wahlweise einen Gleichstrom- oder Gegenstrom-Fluss mit dem Prozessgas in den Spulen oder in den Katalysatorrohren zu realisieren.

8. Verbrennungsprozess nach den Ansprüchen 4, 5 und 6, wobei der Verbrennungsluftfluss im Strahlungskasten in einem oder mehreren Abschnitten im Gleichstrom- oder Gegenstrom-Fluss realisiert werden kann.

9. Verbrennungsprozess nach den Ansprüchen 7 und 8, wobei der Brennstoff (15) mit hoher Geschwindigkeit eingespritzt wird, um Turbulenzen und ein Mischen mit der Verbrennungsluft zu fördern.

10. Verbrennungsprozess nach den Ansprüchen 7 bis 9, wobei die Verteilung des Brennstoffes in der Verbrennungsluft durch Vorrichtungen verbessert wird, wie metallische oder keramische Schäume oder dergleichen, die das Mischen verbessern.

11. Verbrennungsprozess nach den Ansprüchen 7 bis 10, wobei die Inbetriebnahme des Heizgeräts durch Starten der Verbrennung nur im adiabatischen Brenner (9) durchgeführt wird.

12. Verbrennungsprozess nach Anspruch 11, wobei, wenn die Temperatur des den Strahlungsabschnitt verlassenden Rauchgases den gewünschten Wert, oberhalb des Selbstzündungspunktes, erreicht, der im adiabatischen Brenner (9) entzündete Brennstoff (10) so gesteuert wird, dass die Temperatur der Verbrennungsluft auf dem gewünschten Wert konstant gehalten wird und das entzündete Heizgerät bereit ist, das Einsatzmaterial zu verarbeiten.

13. Verbrennungsprozess nach Anspruch 12, wobei der in der ersten Reihe von unten entzündete Brennstoff mit einem großen Luftüberschuss entzündet wird, um eine hohe Flammentemperatur zu vermeiden und die Produktion von NOX zu verringern.

14. Verbrennungsprozess nach Anspruch 4, wobei der Strahlungskasten (1) bei einem niedrigeren Druck als dem atmosphärischen arbeitet und abgedichtet ist.

## Revendications

1. Système de combustion pour transférer de la chaleur à température élevée dans un élément chauffant à réaction comprenant un boîtier rayonnant (1) où le combustible est allumé et dans lequel des bobines de réaction ou des tubes de catalyseur sont immergés, dans lequel le système comprend :
un ou plusieurs brûleurs adiabatiques externes (9) qui sont configurés de sorte que l'air de combustion soit prébrûlé avant d'être introduit dans le boîtier rayonnant (1) afin d'obtenir un mélange gazeux de gaz de carneau et d'air prébrûlé (11, 13) avec tout l'oxygène pour achever la combustion au sein du boîtier rayonnant, à une température supérieure ou égale à la température d'auto-allumage du combustible ; et
une pluralité de buses de pulvérisation de combustible (14) agencées en rangées horizontales sur des parois du boîtier rayonnant (1), aptes à injecter une quantité souhaitée du combustible (15) pour commander le profil de température du gaz de procédé dans les bobines de réaction (4) ou dans les tubes de catalyseur (20) qui sont immergés dans ledit boîtier radial (1).

2. Système de combustion selon la revendication 1, **caractérisé en ce que** :
le boîtier rayonnant (1) est fixé à une section de convection (2) de taille réduite, où l'air de combustion est préchauffé dans la bobine (18) avant d'être fourni au brûleur adiabatique (9).

3. Système de combustion selon la revendication 1, dans lequel pour commander la fourniture de la chaleur aux bobines de réaction ou aux tubes de catalyseur, le combustible (15) injecté par chaque rangée de buses de pulvérisation (14) peut être régulé indépendamment les unes des autres.

4. Procédé de combustion pour transférer de la chaleur à température élevée dans un élément chauffant à réaction comprenant un boîtier rayonnant (1) où le combustible est allumé et dans lequel des bobines de réaction ou des tubes de catalyseur sont immergés, qui prévoit :
la réalisation d'une combustion partielle de l'air de combustion (8), avant qu'il soit introduit dans le boîtier rayonnant (1) pour être mélangé avec le combustible (15), dans un brûleur adiabatique externe (9), afin d'obtenir un mélange gazeux de gaz de carneau et d'air prébrûlé (11, 13) avec tout l'oxygène pour achever la combustion au sein du boîtier rayonnant, à une température supérieure ou égale à la température d'auto-allumage du combustible ;
la fourniture au boîtier radial (1) dudit mélange gazeux chauffé provenant dudit brûleur adiabatique (9), et
le mélange du combustible avec ledit mélange gazeux chauffé dans le boîtier rayonnant (1) pour maintenir la température au niveau requis pour réaliser la réaction endothermique, le mélange du combustible avec ledit mélange gazeux étant amélioré en employant des buses de pulvérisation de combustible (14) agencées en rangées horizontales sur le boîtier rayonnant (1) qui injectent la quantité demandée de combustible (15) dans des directions différentes ou dans des formes différentes pour disperser le combustible dans le boîtier rayonnant (1) et pour optimiser le profil de température du fluide de procédé dans les tubes de catalyseur (20) ou dans les bobines de réaction (4) qui sont immergés dans ledit boîtier radial (1).

5. Procédé de combustion selon la revendication 4, où l'air de combustion provenant du brûleur ou des brûleurs adiabatiques externes est remplacé totalement ou en partie par l'échappement d'une ou de plusieurs turbines à gaz.

6. Procédé de combustion selon les revendications 4 et 5, dans lequel un préchauffage de combustible n'est pas nécessairement requis.

7. Procédé de combustion selon les revendications 4, 5 et 6, dans lequel le gaz de carneau (11, 13) provenant d'un ou de plusieurs brûleurs adiabatiques externes (9) entre dans le boîtier rayonnant (1) de manière à ce qu'il soit possible de réaliser un écoulement à cocourant ou à contre-courant avec le gaz de procédé dans les bobines ou dans les tubes de catalyseur selon le besoin.

8. Procédé de combustion selon les revendications 4, 5 et 6, dans lequel l'écoulement d'air de combustion dans le boîtier rayonnant peut être réalisé dans une ou plusieurs parties dans un écoulement à cocourant ou à contre-courant.

9. Procédé de combustion selon les revendications 7 et 8, dans lequel le combustible (15) est injecté à grande vitesse pour favoriser la turbulence et le mélange avec l'air de combustion.

10. Procédé de combustion selon les revendications 7 à 9, dans lequel la dispersion du combustible dans l'air de combustion est améliorée par des dispositifs, tels que des mousses métalliques ou céramiques ou similaires, qui améliorent le mélange.

11. Procédé de combustion selon les revendications 7 à 10, dans lequel le démarrage de l'élément chauffant est réalisé en démarrant la combustion uniquement dans le brûleur adiabatique (9).

12. Procédé de combustion selon la revendication 11, dans lequel, lorsque la température du gaz de carneau quittant la section rayonnante atteint la valeur souhaitée, supérieure au point d'auto-allumage, un combustible (10) allumé dans le brûleur adiabatique (9) est commandé pour garder la température de l'air de combustion constante à la valeur souhaitée et l'élément chauffant allumé est prêt à gérer la charge d'alimentation.

13. Procédé de combustion selon la revendication 12, dans lequel le carburant allumé dans la première rangée depuis le bas est allumé avec un grand excès d'air afin d'éviter une température de flamme élevée et de diminuer la production de Nox.

14. Procédé de combustion selon la revendication 4, dans lequel le boîtier rayonnant (1) fonctionne à une pression inférieure puis la pression atmosphérique et est étanchéifié.
